# EUROPEAN PATENT SPECIFICATION

(11) **EP 2 824 250 B1**
(45) Date of publication and mention of the grant of the patent: **15.05.2019**
(21) Application number: 13175825.2
(22) Date of filing: 09.07.2013
(51) Int. Cl.: E04B 1/76, F16B 13/04

(54) **Dowel head for the fixture of an insulation board**
Dübelkopf zur Befestigung einer Dämmplatte
Tête de cheville pour la fixation d'un panneau isolant

(43) Date of publication of application: 14.01.2015
(73) Proprietor: Illinois Tool Works, Inc., Glenview, Illinois 60025 (US)
(72) Inventor: Voracek, Lubos, 394 68 Zirovnice (CZ)
(74) Representative: Trinks, Ole

(56) References cited:
- EP-A1- 1 870 533
- EP-A2- 0 846 878
- WO-A1-2011/012096
- CH-A5- 635 907
- DE-A1- 4 312 532
- DE-A1- 19 500 064
- US-B1- 6 308 483

## Description

The invention is directed to a dowel head for the fixture of an insulation board according to the preamble of claim 1, a dowel with such a dowel head according to claim 7 and a method for the installation of a dowel according to the preamble of claim 12.

The dowel in question is used for the fixture of an insulation board to a substrate. The insulation board is usually made of resiliant material like styrofoam, polyurethan foam, glass wool, mineral wool or the like.

The dowel shown in WO 2011/012096 A1 comprises all the features of the preamble of claim 1. This document discloses a dowel comprising a pressure plate and a sleeve that connects the pressure plate to an expanding section. The pressure plate comprises a hole for the insertion of an oblong expansion element. During installation of the dowel the expansion element is driven into the expanding section thereby force fitting the expanding section into the substrate. Further driving the screw like expansion element into the expanding section causes the expansion element to pull the pressure plate into the insulation board. In order for the pressure plate to follow the expansion element the sleeve of the dowel is provided with a compression section which allows shortening the sleeve. With this compression section it is possible for the pressure plate to countersink into the insulation board. Subsequently the pressure plate is provided with a cover of insulation board, such that an exceptional isolation result may be achieved. In order to facilitate countersinking of the pressure plate a cutting blade may be aligned along the circumference of the pressure plate.

One disadvantage of the known dowel is the fact that in the beginning of the installation process there is no constructional means that could prevent rotation of the dowel, in which case the expansion element could not be driven into the expanding section.

It is the object of the invention to improve the known dowel arrangement such that rotation of the dowel during installation is effectively prevented.

The above noted object is solved for a dowel head according to the general part of claim 1 with the features of the characterizing part of claim 1.

According to the invention a weakening arrangement at the pressure plate is provided, which weakening arrangement due to a driving action onto the pressure plate may engage and thereby locally weaken the insulation board in order to facilitate countersinking of the pressure plate. It is of particular importance for the invention that the weakening arrangement also serves as a lock against rotation of the dowel head. For this the weakening arrangement comprises pin like spikes arranged at the pressure plate for spiking into the insulation board due to the driving action onto the pressure plate.

As a result, the spiking process not only weakens the insulation board in order to facilitate countersinking of the pressure plate. It also serves as a lock against rotation.

It has been found that the spiking process requires a very low driving force onto the pressure plate for countersinking of the pressure plate. This is particularly true if the spikes are of conical design or of needle design as proposed in two alternatives of claim 4.

A second teaching according to claim 8 is directed to a weakening arrangement for a dowel head as such.

The idea according to the second teaching is to provide a weakening arrangement, which is designed as a separate component from the rest of the dowel head. In a preferred embodiment the weakening arrangement may be attached to the pressure plate of the dowel head. In the mounted state of the weakening arrangement, the dowel head functions just like the dowel head according to the first teaching. Insofar reference is made to the explanations given for the first teaching.

The advantage of providing an above noted, separate weakening arrangement is the fact that, depending on the application, the dowel head may be provided or may not be provided with a weakening arrangement. Accordingly, the flexibility for the application of the dowel head increases considerably.

A third teaching according to claim 9 is directed to a dowel for the fixture of an insulation board with an above noted dowel head and an oblong expansion element.

The proposed dowel comprises an expanding section for the reception of the expansion element. While driving the expansion element into the expanding section the expanding section expands laterally with respect to the dowel axis for creating a force fit between the expanding section and a substrate. With such a dowel, during driving the expansion element into the expanding section, the pressure plate may easily be countersunk by the resulting pulling action of the expansion element.

A fourth teaching according to claim 14 is directed to a method for the installation of a dowel with a dowel head, which comprises a pressure plate, which pressure plate is being countersunk into the insulation board. According to this fourth teaching it is proposed that before or during countersinking of the pressure plate the insulation board is being locally weakened by spiking the insulation board with pin like spikes in order to facilitate countersinking of the pressing plate. The benefits of spiking have been explained before. Reference may therefore be made to all explanations given for the previous teachings.

In the following the invention will be described in examples referring to the drawings. In the drawings show
- Fig. 1: a proposed dowel with a proposed dowel head in a perspective view basically from the underside,
- Fig. 2: the dowel according to Fig. 1 in a longitudinal section view a) during installation and b) in the installed state,
- Fig. 3: the dowel as shown in Fig. 2 a) in viewing direction IIIa and b) in viewing direction IIIb,
- Fig. 4: a proposed dowel in a another embodiment in longitudinal section view a) during installation and b) in the installed state and
- Fig. 5: a proposed dowel head in another embodiment in a perspective view basically from the underside.

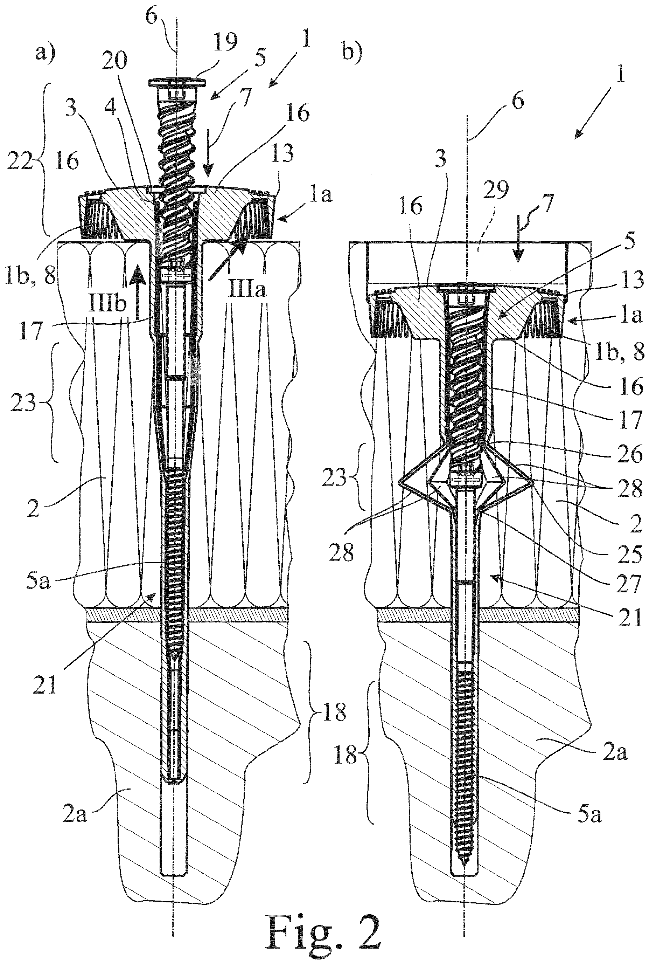

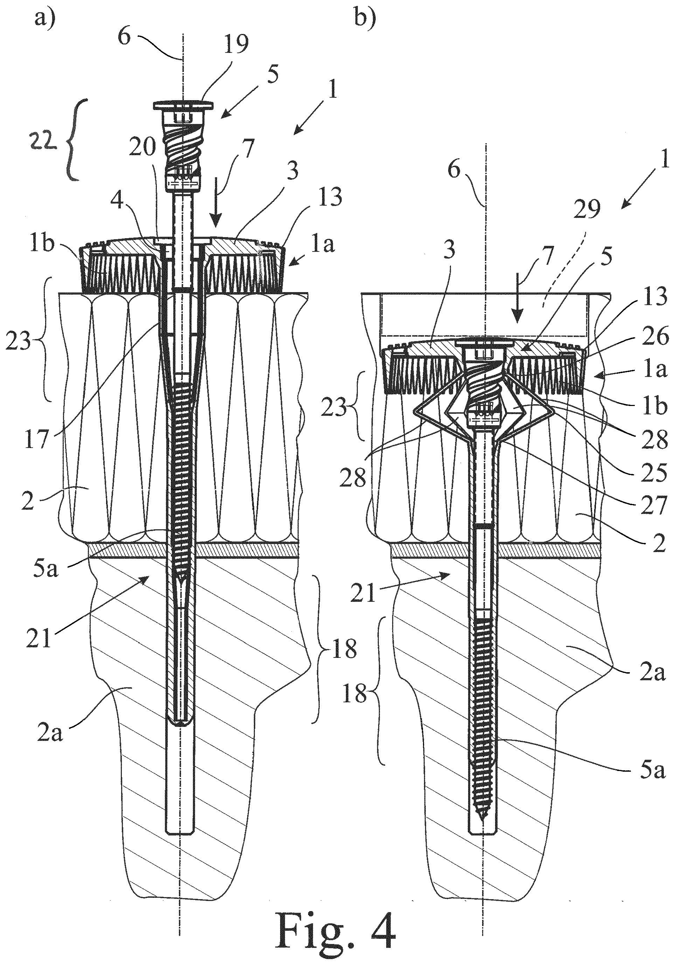

All embodiments shown in the drawings are dowels 1 or components thereof that are used to fix an insulation board 2 to a substrate 2a as shown in Figs. 2 and 4. The fixing process goes back on the installation of the dowel 1. For the installation, firstly, a hole is being drilled into the insulation board 2 and the substrate 2a under the insulation board 2, and secondly, the dowel 1 is being driven into the substrate 2a as will be explained in detail later.

The proposed dowel 1 comprises a dowel head 1a. The dowel head 1a comprises a pressure plate 3, which has a center hole 4 for the insertion of an oblong expansion element 5 along a dowel axis 6. This may be taken from Figs. 2 and 4 as well.

At the pressure plate 3 a weakening arrangement 1b is provided which due to a driving action 7 onto the pressure plate 3 may engage and thereby locally weaken the insulation board 2 in order to facilitate countersinking of the pressure plate 3. The above noted driving action 7 is generally a driving force acting in the countersink direction.

It is essential for the invention that the weakening arrangement 1b comprises pin like spikes 8 that are arranged at the pressure plate 3 for spiking into the insulation board 2 due to the driving action 7 onto the pressure plate 3. This spiking into the insulation board 2 goes along with locally weakening the insulation board 2 in order to facilitate countersinking of the pressure plate 3. Accordingly the spiking process has to lead to a specialized weakening of the insulation board 2 such that countersinking of the pressure plate 3 is actually being facilitated. The weakening is taking place at the circumference of the pressure plate 3 as will be explained later.

The expression "pin like spikes" means that the spikes 8 are each of oblong design. With this pin like design of the spikes 8 it can easily be guaranteed that the spikes 8 provide support surfaces 14, 15 that act as anti rotation locks for the dowel 1.

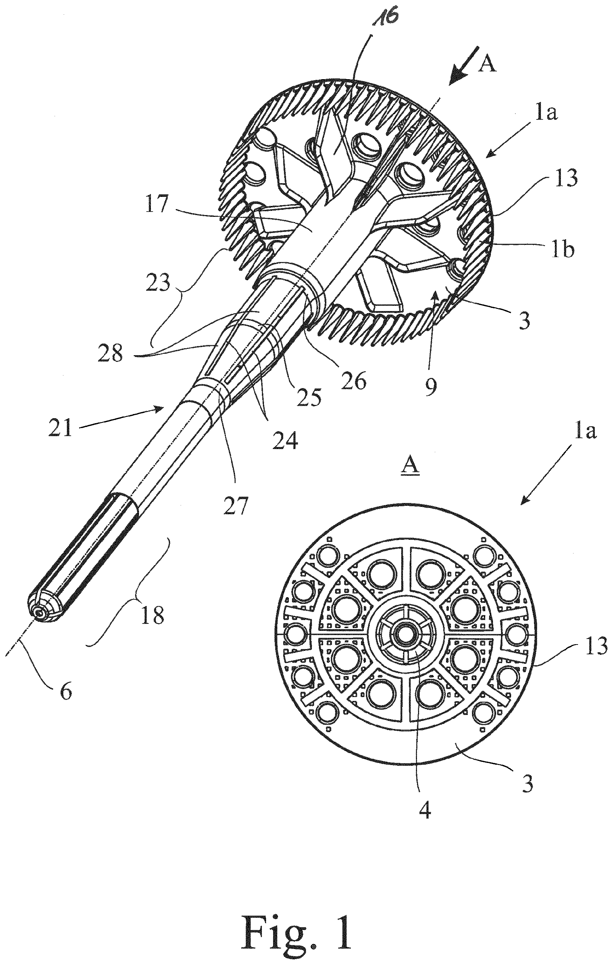

It may be taken from the combination of Figs. 1, 2 and 3 that the spikes 8 project from the underside 9 of the pressure plate 3, wherein, here and preferably, the spikes 8 are attached to the underside 9 of the pressure plate 3. This leads to a mechanically robust dowel arrangement.

Here and preferably the pressure plate 3 is of circular shape such that the circumference 13 of the pressure plate 3 is circular as well. Different shapes of the pressure plate 3 are possible.

There are various possibilities for the alignment of the pin axes 10 of the spikes 8. Here and preferably the pin axes 10 of the spikes 8 are aligned basically parallel to the dowel axis 6. It is also possible that the pin axes 10 of only part of the spikes 8 are aligned accordingly.

Generally it is possible that the pin axes 10 of at least part of the spikes 8 are slightly slanted with respect to a pin axis 10 that is aligned basically parallel to the dowel axis 6. The slanted orientation of the spikes 8 can be helpful to provide additional mechanical tension between the spikes 8 and the insulation board 2 in order to improve the engagement between the dowel head 1a and the insulation board 2.

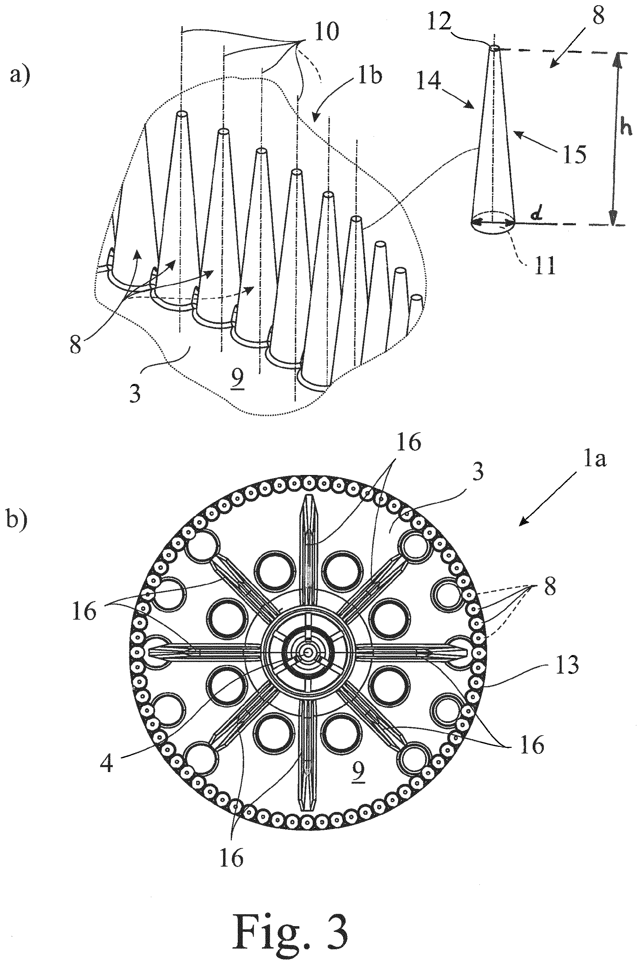

Fig. 3a) shows that the cross-section of the spikes 8 decreases from a respective base area 11 to a respective peak 12. This leads again to high mechanical robustness on the one hand and to a tearing process in the insulation board 2 on the other hand which will be explained later as well.

It is preferred that the pin like spikes 8 have a minimum ratio of the height h of the spike 8 to the diameter d of the envelope circle of the base area 11. The envelope circle of the base area 11 is defined as a circle around the respective pin axis 10, that enfolds the base area 11. Here and preferably the height to base area diameter ratio is larger than 3:1, preferably larger than 4:1. In the especially preferred embodiment shown in Fig. 3 the height to base area diameter ratio is 4.2:1.

Depending on the material of the insulation board 2 different designs for the pin like spikes 8 may be suitable. Here and preferably the spikes 8 are of conical design, in particular with a circular cross-section along the complete longitudinal extension of the pin like spike 8.

An interesting alternative for the design of the spikes 8 is a needle design which allows weakening of even hard insulation boards.

For a mechanically robust arrangement it may be advantageous to apply a pyramid design to the spikes 8.

Finally, especially if a pointed design is not necessary, it may be advantageous to apply a cylindrical design to the pin-like spikes.

Here it becomes clear that the expression "pin like spike" is to be understood in a broad sense. In particular the pin like spikes 8 in this sense do not have to comprise a distinct peak as long as the spikes 8 are slim enough to be spiked into the insulation board 2.

The spikes 8 of the weakening arrangement 1b are distributed basically along the circumference 13 of the pressure plate 3. It is also possible, however, that spikes 8 are being placed in an area at the pressure plate 3, in particular on the underside of the pressure plate 3, that is closer to the dowel axis 6. The spikes 8 are evenly distributed along the circumference 13 of the pressure plate 3.

The distribution of the spikes 8 basically along the circumference 13 is to be understood in a broad sense. This placement of the spikes 8 is such that a weakening of the insulation board 2 takes place in the vicinity of the circumference 13, such that countersinking of the pressure plate 3 is being facilitated.

In the shown embodiments all of the spikes 8 are placed on a circle around the dowel axis 6. The arrangement here is such that the spikes 8 are placed directly next to each other, as may be taken from Fig. 3. This ensures the best utilization of available space.

Here and preferably the spikes 8 are arranged at the pressure plate 3 such that they introduce a perforation into the insulation board 2 at least in the beginning of the installation process. This means that the spikes 8 introduce a number of holes in the insulation board 2 which holes are close to each other and in combination build a path, which path preferably extends along the circumference 13 of the pressure plate 3.

Fig. 3a) shows that each spike 8 provides a circumferential side surface with support surface sections 14, 15, that provide a support against the insulation board 2 in the sense of an anti rotation lock of the dowel 1. Accordingly, if a torque on the pressure plate 3 around the dowel axis 6 occurs, as a result, no cutting with loss of support, but rather a support between the spikes 8 and the insulation board 2 takes place in the sense of a lock of rotation.

In order to even improve the anti rotation effect of the weakening arrangement 1b, it is further proposed that the weakening arrangement 1b comprises ribs 16 that extend in different radial directions with respect to the dowel axis 6 (Fig. 1 to 3). Those ribs 16 project from the underside 9 of the pressure plate 3 in a direction parallel to the dowel axis 6. They are designed such that due to a driving action 7 onto the pressure plate 3 the ribs 16 penetrate the insulating board 2. Here and preferably, the ribs 16 are evenly distributed around the dowel axis 6, which brings about a maximum in mechanical stability. This may best be taken from Fig. 3b).

In order to further increase the mechanical stability the ribs 16 are attached to the underside of the pressure plate 3 and, as an alternative or in addition, to a head sleeve portion 17 of the dowel head la, which head sleeve portion 17 is opening into the hole 4 of the pressure plate 3.

Generally it is possible that the weakening arrangement 1b is designed separately from the rest of the dowel head 1a such that it may be attached and/or detached from the rest of the dowel head 1a. This increases the flexibility in application as noted above.

Another teaching is accordingly directed to the weakening arrangement 1b as such. Such weakening arrangement 1b may be attached to the rest of the dowel head la, in particular slid onto the rest of the dowel head 1a. All explanations given with respect to the proposed dowel head 1a are fully applicable to the weakening arrangement 1b according to the further teaching.

Advantageously the separately designed weakening arrangement 1b is provided in the form of a ring that may be slid onto a head sleeve portion 17 of the dowel head la. Alternative constructional solutions for the separately designed weakening arrangement 1b are possible.

Another teaching is directed to a complete dowel 1 for the fixture of an insulation board 2 with an above noted dowel head 1a and with an oblong expansion element 5. The dowel 1 further comprises an expanding section 18 for the reception of the expansion element 5, which may be taken from Figs. 2 and 4. Driving the expansion element 5 into the expanding section 18 leads to the expanding section 18 expanding laterally with respect to the dowel axis 6 and thereby creating a force fit between the expanding section 18 and the substrate 2a. This expansion of the expanding section 18 is indicated by the sequences of Fig. 2a) and 2b) respective Fig. 4a) and 4b).

For the dowels 1 shown in Fig. 2 and Fig. 4 the driving action 7 onto the pressure plate 3, which causes countersinking of the pressure plate 3, goes back on a driving action onto the expansion element 5. For this the expansion element 5 preferably comprises a head 19 that projects radially from the rest of the expansion element 5 with respect to the dowel axis 6. During installation, in particular during driving the expansion element 5 into the expanding section 18, the head 19 comes into engagement with the edge 20 of the center hole 4, pulling the dowel head la into the direction of the expanding section 18. Here and preferably the driving action on the expansion element 5 is a screwing action on the expansion element 5. Accordingly, the expansion element 5 is provided with a screw thread 5a, which may be screwed into the expanding section 18. As an alternative, for certain applications, it may be advantageous that the driving action on the expansion element 5 is a hammering action on the expansion element 5. In this case the driving action 7 onto the pressure plate 3 goes directly back on the hammering action. A pulling process from the expansion element 5 does not take place in this alternative.

After countersinking of the pressure plate 3 it is preferred to place a cover 29 onto the pressure plate 3 which cover 29 is designed such that a flush surface of the insulating board 2 results. This cover 29 is of particular importance for thermal decoupling of the expansion element 5 from the outside. Further it facilitates the finish of the surface of the insulating board 2 by plaster work.

It may generally be possible that the dowel 1 only consists of the components dowel head la, expanding section 18 and expansion element 5. It is preferred, however, that the dowel 1 comprises a sleeve 21 which is extending between the pressure plate 3 and the expanding section 18. Further preferably, the sleeve 21 is a one piece component. Even easier to manufacture is an arrangement, in which the dowel 1 with the pressure plate 3, the sleeve 21 and the expanding section 18 are combined in a one piece component. A further reduction of the manufacturing costs is possible, if the dowel 1 with the pressure plate 3, the weakening arrangement 1b, the sleeve 21 and the expanding section 18 are combined in a one piece component.

The above noted one piece components are preferably made of a plastic material by injection moulding. The preferred plastic material is Polypropylen or ABS plastic material.

The expansion element 5 may comprise at least a section that is made of a metal material, in particular steel. It may also be composed of a combination of a metal material and a plastics material. Generally it is also possible that the expansion element 5 consists completely of a plastic material, in particular Polypropylen or ABS plastic material.

In the preferred embodiments shown in Figs. 2 and 4 the expansion element 5 comprises a plug section 22, wherein the plug section 22 in the installed state (Fig. 2b), Fig. 4b)) seals the center hole 4 of the pressing plate 3 in particular against the intrusion of water, preferably into the sleeve 21. Further the plug section 22 provides a thermal isolation. For this, preferably, the plug section 22 of the expansion element 5 is made of plastic material, wherein the rest of the expansion element 5 may be made of metal. As an alternative, the expansion element 5 can be completely made of plastic material as noted above.

To enable the above noted countersinking of the pressure plate 3 while the expanding section 18 is fixed to the substrate 2a, it is preferred that the sleeve 21 comprises a compression section 23 that allows compression of the sleeve 21 along the dowel axis 6 during countersinking of the pressure plate 3.

Here and preferably the compression section 23 allows a deformation of the sleeve 21 such that the distance between the pressure plate 3 and the expanding section 18 may be shortened. In particular the compression section 23 comprises a number of slots 24 that extend parallel to the dowel axis 6. In addition, in the middle and/or on both ends of the compression section 23 the sleeve 21 is circumferentially weakened, in particular by a circular rim 25, 26, 27 as shown in Fig. 1. If the driving force onto the sleeve 21 exceeds a certain value, the compression section 23 collapses such that the remaining strips 28 between the slots 24 are folding at the rims 25, 26, 27 and expand laterally with respect to the dowel axis 6.

In the embodiment shown in Fig. 2 the compression section 23 is located in a middle section of the sleeve 21. It is be preferred, however, that the compression section 23 is located in the vicinity to, preferably next to, the pressure plate 3, which is shown in Fig. 4. The location of the compression section 23 is the main difference between the embodiments shown in Figs. 2 and 4.

Instead of an above noted compression section 23 it may be advantageous to provide a sliding engagement between the dowel head la, in particular a head sleeve portion 17 of the dowel head la, and the sleeve 21, such that countersinking of the pressure plate 3 goes along with a sliding motion.

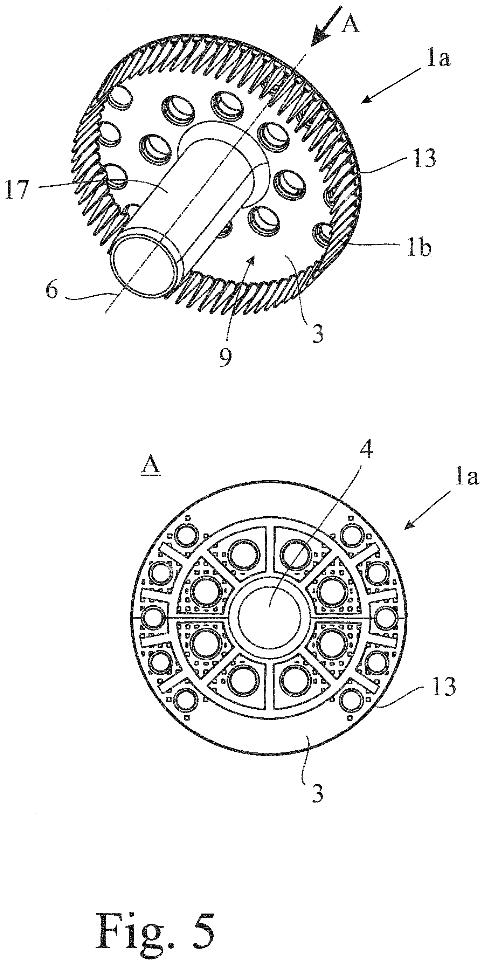

It may be summed that the invention provides at least three interesting products. One such product is a dowel head 1a as shown in Fig. 5, which may or may not be provided with ribs 16. The dowel head 1a may be used in combination with an oblong expansion element 5, which is inserted into the center hole 4 and which at his lower end is being driven into a expanding section 18. The expanding section 18 may be a component that is designed separately from the dowel head 1a.

Another interesting product is the weakening arrangement 1b as such, which may be realised as a separate part as well and which may be attached to a dowel head la. With this separately designed weakening arrangement 1b an increase in flexibility is guaranteed.

Finally an interesting product is the complete dowel 1 shown in Figs. 1 to 3 and 4. The dowel 1 comprises the above noted dowel head la, which may be combined with the sleeve 21 and the expanding section 18 in a one piece component.

According to another teaching, a method for the installation of a dowel 1 with a dowel head 1a is claimed as well. The dowel head 1 comprises a pressure plate 3, which pressure plate 3 is being countersunk into the insulation board 2 as noted above. Preferably, the dowel 1 is designed as an above noted dowel 1.

It is of particular importance for this teaching that before or during countersinking of the pressure plate 3 the insulation board 2 is being locally weakened by spiking the insulation board with pin like spikes 8 in order to facilitate countersinking of the pressing plate 3 as noted above. It is to be noted that the pin like spikes 8 may be placed at the pressure plate 3 as noted above.

Alternatively an additional tool may be provided that carries the pin like spikes 8 and that spikes into the insulation board 2 before the dowel 1 is being installed. This additional tool may be hand driven. In particular it may be a handle that is provided with a weakening arrangement 1b as noted above.

Particularly interesting is the principle of operation during the above noted spiking process. While countersinking of the pressure plate 3 the penetration of the pin like spikes 8 into the insulation board 2 leads to material tearing in the insulation board 2 around the spikes 8. As a result an effective solution for locally weakening the insulation board 2 is provided, which achieves a reliable countersinking process as well as a reliable anti rotation lock.

## Claims

1. Dowel head (1a) of a dowel (1) for the fixture of an insulation board (2), wherein a pressure plate (3) and a center hole (4) in the pressure plate (3) for the insertion of an oblong expansion element (5) along a dowel axis (6) are provided, wherein at the pressure plate (3) a weakening arrangement (1b) is provided which due to a driving action onto the pressure plate (3) may engage and thereby locally weaken the insulation board (2) in order to facilitate countersinking of the pressure plate (3),
**characterized in**
**that** the weakening arrangement (1b) comprises pin like spikes (8) evenly distributed directly next to each other along the circumference of the pressure plate (3) for spiking into the insulation board (2) due to the driving action, wherein weakening of the insulation board (2) takes place in the vicinity of the circumference, and wherein each spike (8) provides a circumferential side surface with support surface sections (14, 15) that provide a support against the insulation board (2) in the sense of an anti rotation lock of the dowel (1).

2. Dowel head according to claim 1, **characterized in that** the spikes (8) project from the underside (9) of the pressure plate (3), preferably, that the spikes (8) are attached to the underside (9) of the pressure plate (3).

3. Dowel head according to one of the preceding claims, **characterized in that** the cross-section of the spikes (8) decreases from a respective base area (11) to a respective peak (12).

4. Dowel head according to one of the preceding claims, **characterized in that** the spikes (8) are of conical design, of needle design, of pyramid design or of cylindrical design.

5. Dowel head according to one of the preceding claims, **characterized in that** the weakening arrangement (1b) comprises ribs (16) that extend in different radial directions with respect to the dowel axis (6), that project from the underside (9) of the pressure plate (3) and that due to a driving action onto the pressure plate (3) penetrate the insulating board (2), preferably, that the ribs (16) are evenly distributed around the dowel axis (6).

6. Dowel head according to claim 5, **characterized in that** the ribs (16) are attached to the underside (9) of the pressure plate (3) and/or to a head sleeve portion (17) of the dowel head (1a).

7. Dowel for the fixture of an insulation board (2) with a dowel head (1a) according to one of the claims 1 to 6 and an oblong expansion element (5), wherein an expanding section (18) for the reception of the expansion element (5) is provided, wherein by driving the expansion element (5) into the expanding section (18) the expanding section (18) expands laterally with respect to the dowel axis (6) for creating a force fit between the expanding section (18) and a substrate (2a).

8. Dowel according to claim 7, **characterized in that** the driving action onto the pressure plate (3) goes back on a driving action onto the expansion element (5), preferably that the driving action onto the expansion element (5) is a screwing action on the expansion element (5), or, that the driving action onto the expansion element (5) is a hammering action on the expansion element (5).

9. Dowel according to claim 7 or 8, **characterized in that** the dowel (1) comprises a sleeve (21) extending between the pressure plate (3) and the expanding section (18), preferably, that the sleeve (21) is a one piece component, further preferably, that the dowel (1) with the pressure plate (3), the sleeve (21) and the expanding section (18) are combined in a one piece component, further preferably,
that the dowel (1) with the pressure plate (3), the weakening arrangement 1lb), the sleeve (21) and the expanding section (18) are combined in a one piece component.

10. Dowel according to claim 9, **characterized in that** the expansion element (5) comprises a plug section (22) and that the plug section (22) in the installed state seals the center hole (4) of the pressing plate (3) in particular against the intrusion of water, preferably, that the plug section (22) of the expansion element (5) is made of plastic material and that the rest of the expansion element (5) is made of metal, or, that the expansion element (5) is completely made of plastic material.

11. Dowel according to one of the claims 7 to 10, **characterized in that** the sleeve (21) comprises a compression section (23) that allows compression of the sleeve (21) along the dowel axis (6) during countersinking of the pressure plate (3), preferably, that the compression section (23) is located in a middle section of the sleeve (21), or, that the compression section (23) is located in the vicinity to, preferably next to, the pressure plate (3).

12. Method for the installation of a dowel (1) according to the claims 7 to 11 with a dowel head (1 a), which dowel head (1a) comprises a pressure plate (3), which pressure plate (3) is being countersunk into the insulation board (2), **characterized in**
**that** before or during countersinking of the pressure plate (3) the insulation (2) board is being locally weakened by spiking the insulation board (2) with pin like spikes (8) evenly distributed directly next to each other along the circumference of the pressure plate (3) for spiking into the insulation board (2) due to the driving action, wherein weakening of the insulation board (2) takes place in the vicinity of the circumference in order to facilitate countersinking of the pressure plate (3), and wherein each spike (8) provides a circumferential side surface with support surface sections (14, 15) that provide a support against the insulation board (2) in the sense of an anti rotation lock of the dowel (1).

13. Method according to claim 12, **characterized in that** during countersinking of the pressure plate (3) the penetration of the pin like spikes (8) into the insulation board (2) leads to material tearing in the insulation board (2) around the spikes (8).

## Patentansprüche

1. Dübelkopf (1a) eines Dübels (1) zur Befestigung einer Dämmplatte (2), wobei eine Druckplatte (3) und ein mittleres Loch (4) in der Druckplatte (3) zum Einführen eines länglichen Expansionselements (5) entlang einer Dübelachse (6) vorgesehen sind, wobei an der Druckplatte (3) eine Schwächungsanordnung (1b) vorgesehen ist, die aufgrund eines Treibvorgangs auf die Druckplatte (3) die Dämmplatte (2) in Eingriff nehmen und dadurch örtlich schwächen kann, um ein Versenken der Druckplatte (3) zu erleichtern,
**dadurch gekennzeichnet,**
**dass** die Schwächungsanordnung (1b) stiftartige Nägel (8) umfasst, die unmittelbar nebeneinander gleichmäßig entlang dem Umfang der Druckplatte (3) verteilt sind, um aufgrund des Treibvorgangs in die Dämmplatte (2) genagelt zu werden, wobei die Schwächung der Dämmplatte (2) in der Nähe des Umfangs erfolgt und wobei jeder Nagel (8) eine Umfangsseitenfläche mit Stützflächenabschnitten (14, 15) bereitstellt, die eine Stütze gegen die Dämmplatte (2) im Sinne einer Verdrehsicherung des Dübels (1) bereitstellen.

2. Dübelkopf nach Anspruch 1, **dadurch gekennzeichnet, dass** die Nägel (8) von der Unterseite (9) der Druckplatte (3) vorragen, vorzugsweise dass die Nägel (8) an der Unterseite (9) der Druckplatte (3) angebracht sind.

3. Dübelkopf nach einem der vorhergehenden Ansprüche, **dadurch gekennzeichnet, dass** der Querschnitt der Nägel (8) von einem jeweiligen Basisbereich (11) zu einer jeweiligen Spitze (12) abnimmt.

4. Dübelkopf nach einem der vorhergehenden Ansprüche, **dadurch gekennzeichnet, dass** die Nägel (8) konisch, nadelförmig, pyramidenförmig oder zylindrisch sind.

5. Dübelkopf nach einem der vorhergehenden Ansprüche, **dadurch gekennzeichnet, dass** die Schwächungsanordnung (1b) Rippen (16) umfasst, die sich bezüglich der Dübelachse (6) in unterschiedlichen radialen Richtungen erstrecken, die von der Unterseite (9) der Druckplatte (3) vorragen und die aufgrund eines Treibvorgangs auf die Druckplatte (3) in die Dämmplatte (2) eindringen, vorzugsweise dass die Rippen (16) gleichmäßig um die Dübelachse (6) herum verteilt sind.

6. Dübelkopf nach Anspruch 5, **dadurch gekennzeichnet, dass** die Rippen (16) an der Unterseite (9) der Druckplatte (3) und/oder an einem Kopfhülsenabschnitt (17) des Dübelkopfs (1a) angebracht sind.

7. Dübel zur Befestigung einer Dämmplatte (2) mit einem Dübelkopf (1a) nach einem der Ansprüche 1 bis 6 und einem länglichen Expansionselement (5), wobei ein Expansionsabschnitt (18) zur Aufnahme des Expansionselements (5) vorgesehen ist, wobei der Expansionsabschnitt (18) durch Treiben des Expansionselements (5) in den Expansionsabschnitt (18) bezüglich der Dübelachse (6) seitlich expandiert, um eine Presspassung zwischen dem Expansionsabschnitt (18) und einem Substrat (2a) zu erzeugen.

8. Dübel nach Anspruch 7, **dadurch gekennzeichnet, dass** der Treibvorgang auf die Druckplatte (3) auf einen Treibvorgang auf das Expansionselement (5) zurückgeht, vorzugsweise dass der Treibvorgang auf das Expansionselement (5) ein Schraubvorgang auf das Expansionselement (5) ist oder dass der Treibvorgang auf das Expansionselement (5) ein Hämmervorgang auf das Expansionselement (5) ist.

9. Dübel nach Anspruch 7 oder 8, **dadurch gekennzeichnet, dass** der Dübel (1) eine sich zwischen der Druckplatte (3) und dem Expansionsabschnitt (18) erstreckende Hülse (21) ist, vorzugsweise dass die Hülse (21) eine einteilige Komponente ist, weiter bevorzugt, dass der Dübel (1) mit der Druckplatte (3), der Hülse (21) und dem Expansionsabschnitt (18) zu einer einteiligen Komponente kombiniert sind, weiter bevorzugt, dass der Dübel (1) mit der Druckplatte (3), der Schwächungsanordnung (1b), der Hülse (21) und dem Expansionsabschnitt (18) zu einer einteiligen Komponente kombiniert sind.

10. Dübel nach Anspruch 9, **dadurch gekennzeichnet, dass** das Expansionselement (5) einen Zapfenabschnitt (22) umfasst und dass der Zapfenabschnitt (22) im installierten Zustand das mittlere Loch (4) der Druckplatte (3) inbesondere gegen das Eindringen von Wasser abdichtet, vorzugsweise dass der Zapfenabschnitt (22) des Expansionselements (5) aus Kunststoffmaterial hergestellt ist und dass der Rest des Expansionselements (5) aus Metall hergestellt ist oder dass das Expansionselement (5) vollständig aus Kunststoffmaterial hergestellt ist.

11. Dübel nach einem der Ansprüche 7 bis 10, **dadurch gekennzeichnet, dass** die Hülse (21) einen Komprimierungsabschnitt (23) umfasst, der eine Komprimierung der Hülse (21) entlang der Dübelachse (6) während des Versenkens der Druckplatte (3) gestattet, vorzugsweise dass der Komprimierungsabschnitt (23) in einem mittleren Abschnitt der Hülse (21) angeordnet ist oder dass der Komprimierungsabschnitt (23) in der Nähe, vorzugsweise neben der Druckplatte (3) angeordnet ist.

12. Verfahren für die Installierung eines Dübels (1) nach Ansprüchen 7 bis 11 mit einem Dübelkopf (1a), wobei der Dübelkopf (1a) eine Druckplatte (3) umfasst, wobei die Druckplatte (3) in die Dämmplatte (2) versenkt ist, **dadurch gekennzeichnet,**
**dass** die Dämmplatte (2) vor dem oder während des Versenkens der Druckplatte (3) örtlich geschwächt wird, indem die Dämmplatte (2) mit stiftartigen Nägeln (8) genagelt wird, die unmittelbar nebeneinander gleichmäßig entlang dem Umfang der Druckplatte (3) verteilt sind, um aufgrund des Treibvorgangs in die Dämmplatte (2) genagelt zu werden, wobei die Schwächung der Dämmplatte (2) in der Nähe des Umfangs erfolgt, um das Versenken der Druckplatte (3) zu erleichtern,
und wobei jeder Nagel (8) eine Umfangsseitenfläche mit Stützflächenabschnitten (14, 15) bereitstellt, die eine Stütze gegen die Dämmplatte (2) im Sinne einer Verdrehsicherung des Dübels (1) bereitstellen.

13. Verfahren nach Anspruch 12, **dadurch gekennzeichnet, dass** während des Versenkens der Druckplatte (3) das Eindringen der stiftartigen Nägel (8) in die Dämmplatte (2) dazu führt, dass Material in der Dämmplatte (2) um die Nägel (8) herum reißt.

## Revendications

1. Tête de cheville (1a) d'une cheville (1), pour la fixation d'un panneau isolant (2), une plaque de pression (3) et un trou central (4) dans la plaque de pression (3), pour l'insertion d'un élément d'expansion oblong (5) le long d'un axe de cheville (6), étant prévus, un agencement d'affaiblissement (1b) étant prévu au niveau de la plaque de pression (3), lequel, sous l'effet d'une action d'enfoncement sur la plaque de pression (3), peut venir en contact avec le panneau isolant (2) et l'affaiblir ainsi localement afin de faciliter le fraisage de la plaque de pression (3),
**caractérisée en ce que**
l'agencement d'affaiblissement (1b) comprend des pointes de type aiguilles (8) réparties uniformément les unes à côté des autres le long de la circonférence de la plaque de pression (3) pour s'enfoncer dans le panneau isolant (2) sous l'effet de l'action d'enfoncement, l'affaiblissement du panneau isolant (2) se produisant à proximité de la circonférence, et chaque pointe (8) fournissant une surface latérale circonférentielle avec des sections de surface de support (14, 15) qui fournissent un support contre le panneau isolant (2) dans le sens d'un verrouillage anti-rotation de la cheville (1).

2. Tête de cheville selon la revendication 1,
**caractérisée en ce que** les pointes (8) font saillie depuis le côté inférieur (9) de la plaque de pression (3), de préférence **en ce que** les pointes (8) sont attachées au côté inférieur (9) de la plaque de pression (3).

3. Tête de cheville selon l'une quelconque des revendications précédentes, **caractérisée en ce que** la section transversale des pointes (8) diminue depuis une zone de base respective (11) jusqu'à un sommet respectif (12).

4. Tête de cheville selon l'une quelconque des revendications précédentes, **caractérisée en ce que** les pointes (8) ont une forme conique, une forme d'aiguille, une forme pyramidale ou une forme cylindrique.

5. Tête de cheville selon l'une des revendications précédentes, **caractérisée en ce que** l'agencement d'affaiblissement (1b) comprend des nervures (16) qui s'étendent dans différentes directions radiales par rapport à l'axe de cheville (6), qui font saillie depuis le côté inférieur (9) de la plaque de pression (3) et qui, sous l'effet d'une action d'enfoncement sur la plaque de pression (3), pénètrent dans le panneau isolant (2), de préférence **en ce que** les nervures (16) sont réparties uniformément autour de l'axe de cheville (6) .

6. Tête de cheville selon la revendication 5,
**caractérisée en ce que** les nervures (16) sont attachées au côté inférieur (9) de la plaque de pression (3) et/ou à une portion de manchon de tête (17) de la tête de cheville (1a).

7. Cheville pour la fixation d'un panneau isolant (2), comprenant une tête de cheville (1a) selon l'une quelconque des revendications 1 à 6, et un élément d'expansion oblong (5), une section d'expansion (18) pour recevoir l'élément d'expansion (5) étant prévue, et, par enfoncement de l'élément d'expansion (5) dans la section d'expansion (18), la section d'expansion (18) se dilatant latéralement par rapport à l'axe de cheville (6) pour créer un ajustement par force entre la section d'expansion (18) et un substrat (2a) .

8. Cheville selon la revendication 7, **caractérisée en ce que** l'action d'enfoncement sur la plaque de pression (3) revient à une action d'enfoncement sur l'élément d'expansion (5), de préférence **en ce que** l'action d'enfoncement sur l'élément d'expansion (5) est une action de vissage sur l'élément d'expansion (5), ou **en ce que** l'action d'enfoncement sur l'élément d'expansion (5) est une action de martelage sur l'élément d'expansion (5).

9. Cheville selon la revendication 7 ou 8,
**caractérisée en ce que** la cheville (1) comprend un manchon (21) s'étendant entre la plaque de pression (3) et la section d'expansion (18), de préférence **en ce que** le manchon (21) est un composant d'une seule pièce, en outre de préférence, **en ce que** la cheville (1) avec la plaque de pression (3), le manchon (21) et la section d'expansion (18) sont combinés en un composant d'une seule pièce, en outre de préférence **en ce que** la cheville (1) avec la plaque de pression (3), l'agencement d'affaiblissement (1b), le manchon (21) et la section d'expansion (18) sont combinés en un composant d'une seule pièce.

10. Cheville selon la revendication 9, **caractérisée en ce que** l'élément d'expansion (5) comprend une section de bouchon (22) et **en ce que** la section de bouchons (22), dans l'état installé, scelle le trou central (4) de la plaque de pression (3), en particulier pour empêcher la pénétration d'eau, de préférence **en ce que** la section de bouchon (22) de l'élément d'expansion (5) est fabriquée en matière plastique et **en ce que** le reste de l'élément d'expansion (5) est fabriqué en métal, ou **en ce que** l'élément d'expansion (5) est entièrement fabriqué en matière plastique.

11. Cheville selon l'une des revendications 7 à 10,
**caractérisée en ce que** le manchon (21) comprend une section de compression (23) qui permet la compression du manchon (21) le long de l'axe de cheville (6) au cours du fraisage de la plaque de pression (3), de préférence **en ce que** la section de compression (23) est située dans une section centrale du manchon (21), ou **en ce que** la section de compression (23) est située à proximité de la plaque de pression (3), de préférence est adjacente à celle-ci.

12. Procédé d'installation d'une cheville (1) selon les revendications 7 à 11, avec une tête de cheville (1a), laquelle tête de cheville (1a) comprend une plaque de pression (3), laquelle plaque de pression (3) est fraisée dans le panneau isolant (2),
**caractérisé en ce qu'**avant ou pendant le fraisage de la plaque de pression (3), le panneau isolant (2) s'affaiblit localement en perçant le panneau isolant (2) avec des pointes de type aiguilles (8) réparties uniformément directement les unes à côté des autres le long de la circonférence de la plaque de pression (3) pour s'enfoncer dans le panneau isolant (2) sous l'effet de l'action d'enfoncement, l'affaiblissement du panneau isolant (2) se produisant à proximité de la circonférence afin de faciliter le fraisage de la plaque de pression (3), et chaque pointe (8) fournissant une surface latérale circonférentielle avec des sections de surface de support (14, 15) qui fournissent un support contre le panneau isolant (2) dans le sens d'un verrouillage anti-rotation de la cheville (1).

13. Procédé selon la revendication 12, **caractérisé en ce qu'**au cours du fraisage de la plaque de pression (3), la pénétration des pointes de type aiguilles (8) dans le panneau isolant (2) entraîne la déchirure du matériau du panneau isolant (2) autour des pointes (8).
